# EUROPEAN PATENT APPLICATION

(11) **EP 4 607 681 A1**
(43) Date of publication of application: **27.08.2025**
(21) Application number: 23895078.6
(22) Date of filing: 24.11.2023
(51) Int. Cl.: H01M 50/392, H01M 50/145, H01M 50/178, B32B 27/08, B32B 27/32, B32B 27/28, H01M 50/198, H01M 50/186

(54) **POUCH-TYPE SECONDARY BATTERY**

(30) Priority: 24.11.2022 KR 20220159794; 14.12.2022 KR 20220175297; 23.11.2023 KR 20230164467
(71) Applicant: LG Energy Solution, Ltd., Seoul 07335 (KR)
(72) Inventor: LEE, Yu Jin, Daejeon 34122 (KR); PARK, Eun Suk, Daejeon 34122 (KR); KIM, Sang Hun, Daejeon 34122 (KR); YU, Hyung Kyun, Daejeon 34122 (KR); LEE, Jae Ho, Daejeon 34122 (KR)
(74) Representative: Plasseraud IP
(86) International application number: PCT/KR2023/019092
(87) International publication number: WO 2024/112151

(57) **Abstract**

A pouch type secondary battery according to the present invention includes an electrode assembly, a pouch type case including an accommodation portion for accommodating the electrode assembly and a sealing portion for sealing the accommodation portion, an electrode lead connected to the electrode assembly and protruding to the outside of the pouch type case via the sealing portion, a lead film disposed between the electrode lead and the pouch type case, and a gas guide portion disposed between the electrode lead and the lead film. The gas guide portion includes a first layer in contact with the electrode lead, and a second layer disposed on the first layer, and the first layer includes a modified polyolefin resin.

## Description

### TECHNICAL FIELD

### CROSS-REFERENCE TO RELATED APPLICATIONS

This application claims the benefit of Korean Patent Application Nos. 10-2022-0159794 filed on November 24, 2022, 10-2022-0175297 filed on December 14, 2022, and 10-2023-0164467 filed on November 23, 2023 in the Korean Intellectual Property Office, the disclosures of all of which are incorporated herein in their entirety by reference.

### Technical Field

The present disclosure relates to a pouch type secondary battery, and more particularly, to a pouch type secondary battery including a gas guide portion.

### BACKGROUND ART

Secondary batteries are used in various categories including small-sized products such as digital cameras, P-DVDs, MP3Ps, mobile phones, PDAs, portable game devices, power tools, and E-bikes as well as large-sized products requiring high power such as electric vehicles and hybrid vehicles, power storage devices for storing surplus power or renewable energy, and backup power storage devices. The secondary batteries include nickel-cadmium batteries, nickel-hydrogen batteries, lithium ion batteries, and lithium ion polymer batteries.

The secondary batteries may be manufactured by accommodating an electrode assembly, in which a positive electrode, a negative electrode, and a separator sandwiched therebetween are alternately stacked, in a battery case, injecting an electrolyte, and then sealing the battery case. The secondary batteries are classified by their case material into pouch type secondary batteries or can type secondary batteries. Pouch type batteries may be manufactured by performing press processing on a flexible pouch film laminate to form a cup portion, and then accommodating an electrode assembly in a receiving space inside the cup portion and sealing a sealing portion.

The pouch type secondary batteries may generate gas inside a pouch when operated at high temperatures, overcharged, or brought with a short circuit. When gas pressure inside the pouch increases, the pouch may explode or ignite. To overcome the above issue, typically, a gas guide portion is disposed at a connection portion between an electrode lead and a pouch type film laminate, which are of different kinds of materials. When pressure increases, an interface between the gas guide portion and the lead film is opened to discharge gas to the outside of the pouch. However, when the interface is opened, the adhesive strength between the gas guide portion and the electrode lead is reduced. As a result, the gas guide portion may detach from the electrode lead and be pushed out of the pouch. The electrode lead can then become corroded due to electrolyte leaked from the inside of the pouch, causing degradation in durability and safety of the pouch.

### DISCLOSURE OF THE INVENTION

### TECHNICAL PROBLEM

An aspect of the present disclosure provides a pouch type secondary battery capable of improving adhesive strength between a gas guide portion and an electrode lead.

### TECHNICAL SOLUTION

According to an aspect of the present disclosure, provided is a pouch type secondary battery including an electrode assembly, a pouch type case including an accommodation portion for accommodating the electrode assembly and a sealing portion for sealing the accommodation portion, an electrode lead connected to the electrode assembly and protruding to the outside of the pouch type case via the sealing portion, a lead film disposed between the electrode lead and the pouch type case, and a gas guide portion disposed between the electrode lead and the lead film, wherein the gas guide portion includes a first layer in contact with the electrode lead, and a second layer disposed on the first layer, and the first layer includes a modified polyolefin resin.

### ADVANTAGEOUS EFFECTS

A pouch type secondary battery according to the present disclosure includes a modified polyolefin resin in a first layer in contact with an electrode lead in a gas guide portion, thus improving adhesive strength between the gas guide portion and the electrode lead. Accordingly, even when the pouch type secondary battery is stored at high electrolyte temperature, the pouch gas guide portion is prevented from being detached from the electrode lead and pushed outside of the pouch, which prevents an electrolyte solution inside the pouch from leaking. Accordingly, the pouch type secondary battery of the present disclosure is prevented from having electrode lead corrosion caused by electrolyte solutions and/or gases to have enhanced durability and safety.

### BRIEF DESCRIPTION OF THE DRAWINGS

The following drawings attached herein illustrate preferred examples of the present disclosure by example, and serve to enable technical concepts of the present disclosure to be further understood together with detailed description of the disclosure given below, and therefore the present disclosure should not be interpreted only with matters in such drawings.
FIG. 1 is an exploded view of a pouch type secondary battery according to the present disclosure;
FIG. 2 is a cross-sectional view of a sealed pouch type secondary battery;
FIG. 3 is a cross-sectional view of a portion of a pouch type secondary battery before a pouch type case is opened, according to an example of the disclosure;
FIG. 4 is a cross-sectional view of the portion of the pouch type secondary battery of the example of FIG. 3 when the pouch type case is opened;
FIG. 5 is a cross-sectional view of a portion of a pouch type secondary battery before a pouch type case is opened, according to another example of the disclosure;
FIG. 6 is a cross-sectional view of a portion of a pouch type secondary battery before a pouch type case is opened, according to another example of the disclosure; and
FIG. 7 is a plan view showing an upper surface of a sealing portion according to an aspect of the present disclosure.

### MODE FOR CARRYING OUT THE INVENTION

Advantages and features of the present disclosure and methods of accomplishing the same may be understood more readily by reference to the following detailed description of embodiments and the accompanying drawings. However, the present disclosure may be embodied in different forms, and these embodiments are provided only to make this disclosure thorough and complete and to fully convey the scope of the present disclosure to those skilled in the art, and thus the present disclosure is defined only by the scope of the appended claims. Like reference numerals denote like elements throughout specification.

Unless otherwise defined, all terms (including technical and scientific terms) used herein have the same meaning as commonly understood by one of ordinary skill in the art to which the present disclosure belongs. Terms as defined in a generally used dictionary are not construed ideally or excessively unless defined apparently and specifically.

Terms used herein are not for limiting the inventive concept but for describing the embodiments. As used herein, the singular forms include the plural forms as well, unless the context clearly indicates otherwise. The meaning of "comprises" and/or "comprising" as used herein does not exclude the presence or addition of one or more other components besides a mentioned component.

Herein, when an element "includes" a component, it may indicate that the element does not exclude another component unless explicitly described to the contrary, but may further include another component.

Herein, the description "A and/or B" refers to A or B, or A and B.

Herein, "%" refers to wt% unless indicated otherwise.

A pouch type secondary battery according to the present disclosure includes an electrode assembly, a pouch type case including an accommodation portion for accommodating the electrode assembly and a sealing portion for sealing the accommodation portion, an electrode lead connected to the electrode assembly and protruding to the outside of the pouch type case via the sealing portion, a lead film disposed between the electrode lead and the pouch type case, and a gas guide portion disposed between the electrode lead and the lead film. The gas guide portion includes a first layer in contact with the electrode lead, and a second layer disposed on the first layer, where the first layer includes a modified polyolefin resin.

Hereinafter, respective components of the pouch type secondary battery of the present disclosure will be described in more detail with reference to the drawings.

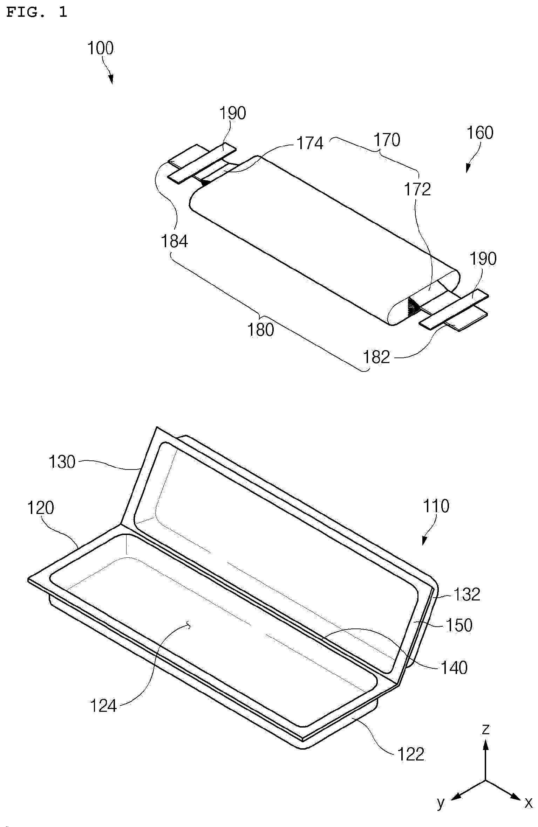

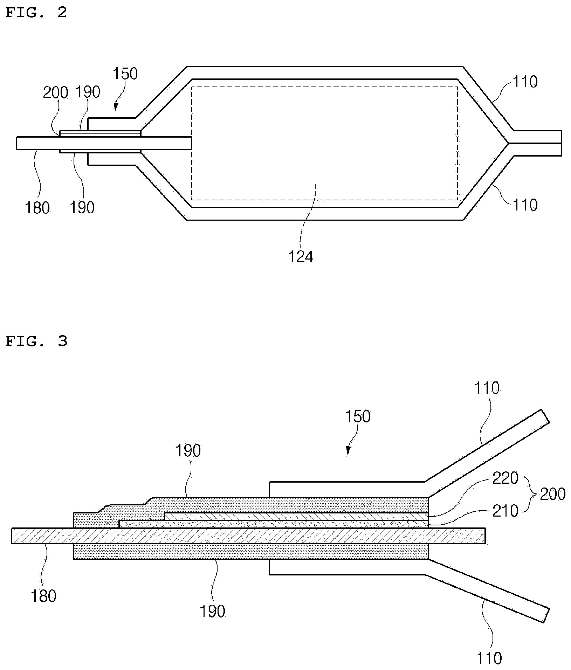

FIG. 1 is an exploded view of a pouch type secondary battery 100 according to the present disclosure, and FIG. 2 is a perspective view of a sealed pouch type secondary battery 100. In FIG. 2, some components of the pouch type secondary battery 100 are not provided for convenience of understanding. As shown in FIGS. 1 and 2, the pouch type secondary battery 100 of the present disclosure includes a pouch type case 110, an electrode assembly 160, an electrode lead 180, a lead film 190, and a gas guide portion 200.

### (1) Pouch type case

The pouch type case 110 may store the electrode assembly 160 inside. The pouch type case 110 may be manufactured by molding a pouch film laminate. In this case, the pouch film laminate may include a base layer, a gas barrier layer, and a sealant layer. In the pouch film laminate, the base layer, the gas barrier layer, and the sealant layer may be sequentially stacked.

The base layer is formed on an outermost layer of the pouch film laminate to protect the secondary battery against external friction and collision. The base layer is made of a polymer and may thus electrically insulate the electrode assembly from the outside of the pouch type case 110.

The base layer may be made of at least one or more materials selected from the group consisting of polyethylene, polypropylene, polycarbonate, polyethylene terephthalate, polyvinyl chloride, acrylic polymer, polyacrylonitrile, polyimide, polyamide, cellulose, aramid, nylon, polyester, polyparaphenylene benzobisoxazole, polyarylate, teflon, and glass fiber. Preferably, the base layer may be made of an abrasion resistant and heat resistant material such as polyethylene terephthalate (PET), nylon, or a combination thereof.

The base layer may have a single film structure made of any one material. Alternatively, the base layer may have a composite film structure in which two or more materials are respectively formed as layers.

The base layer may have a thickness of 5 µm to 50 µm, specifically 7 µm to 40 µm, more specifically 25 µm to 38 µm. When the thickness of the base layer satisfies the above range, the external insulation is enhanced, and the entire pouch is less thick, which may improve the energy density to volume ratio of the secondary battery.

The gas barrier layer is stacked between the base layer and the sealant layer to secure mechanical strength of the pouch, block the entry and exit of gases or moisture outside the secondary battery, and prevent electrolyte leakage from the inside of the pouch type case.

The gas barrier layer may be formed of metal, and may specifically be formed of an aluminum alloy thin film. When forming a gas barrier layer using an aluminum alloy thin film, the gas barrier layer may have a predetermined level of mechanical strength and also be lightweight, and it may complement the electrochemical properties between the electrode assembly and the electrolyte, as well as to provide heat dissipation. The aluminum alloy thin film may include metal elements other than aluminum (Al), for example, it may include at least one selected from the group consisting of iron (Fe), copper (Cu), chromium (Cr), manganese (Mn), nickel (Ni), magnesium (Mg), silicon (Si), and zinc (Zn).

The gas barrier layer may have a thickness of 40 µm to 100 µm, specifically 50 µm to 90 µm, more specifically 55 µm to 85 µm. When the thickness of the gas barrier layer satisfies the above range, moldability and gas barrier performance are enhanced when molding a cup portion.

The sealant layer is thermally bonded together at a sealing portion, thus sealing the electrode assembly inside the pouch type case. To this end, the sealant layer may be formed of a material having enhanced heat sealing strength.

The sealant layer may be formed of a material having insulation, corrosion resistance, and sealing properties. Specifically, the sealant layer is in direct contact with the electrode assembly and/or electrolyte inside the pouch type case, and may thus be formed of a material having insulation and corrosion resistance. In addition, the sealant layer is supposed to completely seal the inside of the pouch type case and block material movement between the inside and outside of the pouch type case, and may thus be formed of a material having high sealing properties (e.g., high heat sealing strength). To make sure that such insulation, corrosion resistance, and sealing properties are obtained, the sealant layer may be formed of a polymer material.

The sealant layer may be made of at least one or more materials selected from the group consisting of polyethylene, polypropylene, polycarbonate, polyethylene terephthalate, polyvinyl chloride, acrylic polymer, polyacrylonitrile, polyimide, polyamide, cellulose, aramid, nylon, polyester, polyparaphenylene benzobisoxazole, polyarylate, teflon, and glass fiber, and may preferably be made of a polyolefin-based resin such as polypropylene (PP) and/or polyethylene (PE). In this case, polypropylene may be provided with cast polypropylene (CPP), acid modified polypropylene (PPa), polypropylene-ethylene copolymer, and/or polypropylene-butylene-ethylene terpolymer.

The sealant layer may have a thickness of 30 µm to 130 µm, specifically 50 µm to 120 µm, more specifically 70 µm to 100 µm. When the thickness of the sealant layer satisfies the above range, there is an effect of both securing the sealing strength of a sealing portion and securing the moldability of a pouch film laminate.

Meanwhile, the pouch film laminate may be drawn, molded, or stretched by a punch or the like to manufacture the pouch type case 110. Accordingly, the pouch type case 110 may include a cup portion 122 and an accommodation portion 124. The accommodation portion 124 is a place to store the electrode assembly, and may indicate a receiving space formed in the shape of a pocket inside the cup portion 122 as the cup portion 122 is formed.

According to an aspect of the present disclosure, the pouch type case 110 may include a first case 120 and a second case 130 as shown in FIG. 1. The first case 120 may include an accommodation portion 124 capable of accommodating the electrode assembly 160, and the second case 130 may cover the accommodation portion 124 from above to prevent the electrode assembly 160 from being separated to the outside of the battery case 110. The first case 120 and the second case 130 may be manufactured in a way that one side of the first case 120 and one side of the second case 130 may be connected to each other as shown in FIG. 1, but the aspect of the present disclosure is not limited thereto, and the first case 120 and the second case 130 may be diversely manufactured, for example, the first case 120 and second case 130 may individually be manufactured by being separated from each other.

According to another aspect of the present disclosure, when forming a cup portion in a pouch film laminate, two symmetrical cup portions 122 and 132 may be drawn and molded adjacent to each other in one pouch film laminate. In this case, the cup portions 122 and 132 may be formed in the first case 120 and the second case 130, respectively, as shown in FIG. 1. After accommodating the electrode assembly 160 in the accommodation portion 124 provided in the cup portion 122 of the first case 120, a bridge portion 140 is formed between the two cup portions 122 and 132, and the bridge portion 140 may be folded such that the two cup portions 122 and 132 face each other. In this case, the cup portion 132 of the second case 130 may accommodate the electrode assembly 160 from above. Accordingly, the two cup portions 122 and 132 accommodate one electrode assembly 160, and thus an electrode assembly 160 that is thicker than one cup portion 122 may be accommodated. In addition, one edge of the secondary battery 100 is formed by folding the pouch type case 110, and accordingly, the number of edges to be sealed may be reduced when a sealing process is performed later. Accordingly, process speed of the pouch type secondary battery 100 may be improved and the number of sealing processes may be reduced.

The pouch type case 110 may be sealed while accommodating the electrode assembly 160 so that a portion of an electrode lead 180, which will be described later, i.e., a terminal portion, is exposed. Specifically, when the electrode lead 180 is connected to an electrode tab 170 of the electrode assembly 160 and a lead film 190 is formed on a portion of the electrode lead 180, the electrode assembly 160 may be accommodated in the accommodation portion 124 provided in the cup portion 122 of the first case 120, and the second case 130 may cover the accommodation portion 124 from above. Then, an electrolyte is injected into the accommodation portion 124 and the sealing portion 150 formed on an edge of the first case 120 and the second case 130 may be sealed.

The sealing portion 150 may serve to seal the accommodation portion 124. Specifically, the sealing portion 150 may be formed along an edge of the accommodation portion 124 and may thus seal the accommodation portion 124.

The temperature at which the sealing portion 150 is sealed may be 180 °C to 250 °C, specifically 200 °C to 250 °C, more specifically 210 °C to 240 °C. When the sealing temperature satisfies the above numerical range, the pouch type case 110 may obtain sufficient sealing strength through heat sealing.

### (2) Electrode assembly

The electrode assembly 160 may be inserted into the pouch type case 110 and sealed through the pouch type case 110 after electrolyte injection.

A positive electrode, a separator, and a negative electrode may be sequentially stacked to form the electrode assembly 160. Specifically, the electrode assembly 160 may include two types of electrodes, which are a positive electrode and a negative electrode, and a separator sandwiched between the electrodes to insulate the electrodes from each other.

The positive electrode and the negative electrode may have a structure in which an active material slurry is applied to an electrode current collector in the form of a metal foil or metal mesh containing aluminum and copper, respectively. Typically, granular active materials, auxiliary conductors, binders, and conductive materials are stirred with a solvent added to form a slurry. The solvent may be removed in subsequent processing.

A slurry mixed with an electrode active material, a binder, and/or a conductive material is applied to a positive electrode current collector and a negative electrode current collector to manufacture a positive electrode and a negative electrode. The positive electrode and the negative electrode are stacked on both sides of the separator, and accordingly, the electrode assembly 160 may be manufactured into a predetermined shape. Types of the electrode assembly 160 may include a stack type, a jelly roll type, and a stack and folding type, but are not limited thereto.

The electrode assembly 160 may include an electrode tab 170.

The electrode tab 170 is connected to each of the positive electrode and the negative electrode of the electrode assembly 160, and protrudes outward from the electrode assembly 160, and may thus serve as a path through which electrons move between the inside and the outside of the electrode assembly 160. A current collector included in the electrode assembly 160 may be provided with a portion to which an electrode active material is applied, and an end portion to which an electrode active material is not applied, that is, a non-coating portion. The electrode tab 170 may be formed by cutting the non-coating portion or formed by connecting a separate conductive member to the non-coating portion through ultrasonic welding or the like. As shown in FIG. 1, the electrode tab 170 may protrude in different directions from the electrode assembly 160, but is not limited thereto, and may be formed to protrude in various directions, such as protruding from one side in the same direction.

### (3) Electrode lead

The electrode lead 180 may supply electricity to the outside of the secondary battery 100. The electrode lead 180 may be connected to the electrode tab 170 of the electrode assembly 160 through spot welding, or the like.

The electrode lead 180 may be connected to the electrode assembly 160 and may protrude to the outside of the pouch type case 110 via the sealing portion 150. Specifically, one end of the electrode lead 180 may be connected to the electrode assembly 160, particularly to the electrode tab 170, and the other end of the electrode lead 180 may protrude to the outside of the pouch type case 110.

The electrode lead 180 may include a positive electrode lead 182 with one end connected to the positive electrode tab 172 and extending in a direction in which the positive electrode tab 172 protrudes, and a negative electrode lead 184 with one end connected to the negative electrode tab 174 and extending in a direction in which the negative electrode tab 174 protrudes. The other ends of both the positive lead 182 and the negative lead 184 may protrude to the outside of the battery case 110. Accordingly, electricity generated inside the electrode assembly 160 may be supplied to the outside. In addition, the positive electrode tab 172 and the negative electrode tab 174 are each formed to protrude in various directions, and accordingly, the positive electrode lead 182 and the negative electrode lead 184 may also extend in various directions. The positive electrode lead 182 and the negative electrode lead 184 may be made of materials different from each other. That is, the positive electrode lead 182 may be made of the same aluminum (Al) material as a positive electrode current collector, and the negative electrode lead 184 may be made of the same copper (Cu) or nickel (Ni)-coated copper material as a negative electrode current collector. A portion of the electrode lead 180 protruding to the outside of the battery case 110 may serve as a terminal portion and be electrically connected to an external terminal.

One side of the electrode lead 180, which is in direct contact with the lead film 190 and/or the gas guide portion 200, may be coated with at least one selected from the group consisting of chromium (Cr), nickel (Ni), aluminum oxide (Al₂O₃), zirconium (Zr)-based anhydrous salt, and titanium (Ti)-based anhydrous salt. In this case, corrosion resistance against an electrolyte solution and adhesion to the lead film 190 and/or the gas guide portion 200 may be obtained.

### (4) Lead film

The lead film 190 may prevent electricity generated from the electrode assembly 160 from flowing to the battery case 110 through the electrode lead 180, and allow the sealing of the battery case 110 to be maintained. To this end, the lead film 190 may be a non-conductor having non-conductive properties in which electricity does not flow well. In general, the lead film 190 may be a relatively thin insulation tape easily attached to the electrode lead 180 and/or the gas guide portion 200, but the present disclosure is not limited thereto, and thus any member capable of insulating the electrode lead 180 may be used.

The lead film 190 according to an aspect of the present disclosure may be a gas-permeable film and may be disposed to surround an outer circumferential surface of the electrode lead 180 and the gas guide portion 200. Specifically, the electrode lead 180 and the gas guide portion 200 are in contact with each other on one side, and in this case, at least a portion of the electrode lead 180 and the gas guide portion 200 may be surrounded by the lead film 190. The lead film 190 may be placed only within the sealing portion 150 in which the first case 120 and the second case 130 of the pouch type case 110 are thermally fused, and may make the electrode lead 180 and the gas guide portion 200 adhere to the battery case 110.

The lead film 190 may be disposed between the electrode lead 180 and/or the gas guide portion 200 and the pouch type case 110. For example, as shown in FIG. 2, a lower case 110, a lead film 190, an electrode lead 180, a gas guide portion 200, a lead film 190, and an upper case 110 may be stacked and disposed in this order in the sealing portion 150. In addition, although not shown in the drawing, as another example, a lower case, a lead film, a gas guide portion, an electrode lead, a lead film, and an upper case may be stacked and disposed in this order, and as another example, a lower case, a lead film, a gas guide portion, an electrode lead, a gas guide portion, a lead film, and an upper case may be stacked and disposed in this order.

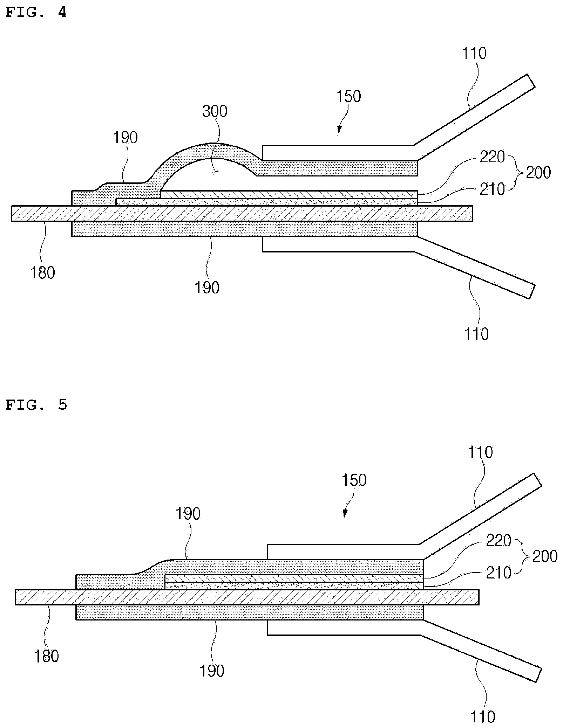

According to an aspect of the present disclosure, one end of the lead film 190 protruding outward from the pouch type case 110 may be disposed to directly contact the electrode lead 180 instead of the gas guide portion 200 as shown in FIG. 3 or FIG. 5. When one end of the lead film 190 is disposed in direct contact with the electrode lead 180 and extends further than the gas guide portion 200 disposed on the electrode lead 180, the lead film 190 on the gas guide portion 200 may be opened with gas discharge. Thus, an area through which gas permeates through the lead film 190 may be easily secured. Compared to the case in which the lead film 190 is disposed without extension, the adhesive strength between the lead film 190 and the electrode lead 180 may minimize durability degradation caused by the opening of the lead film 190.

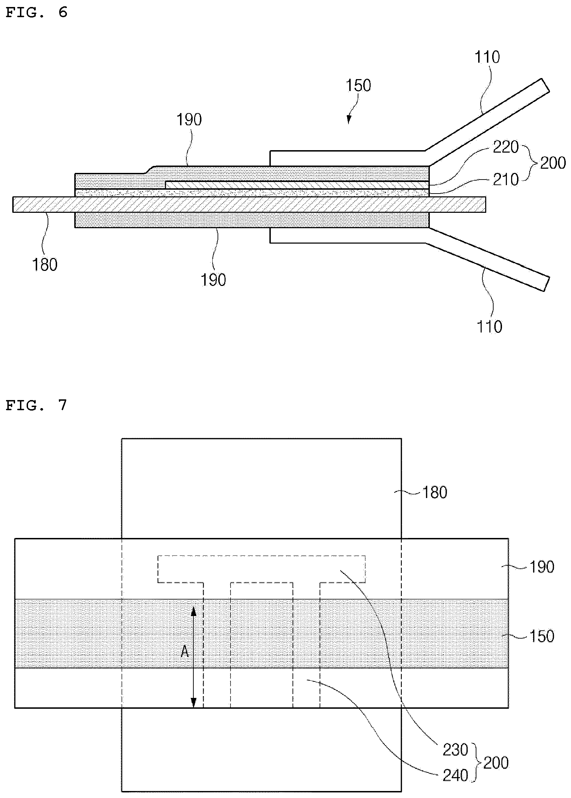

According to another aspect of the present disclosure, as shown in FIG. 3 or FIG. 6, the first layer 210 of the gas guide portion 200 may be formed to be longer in an outer direction of the pouch type case 110 than the second layer 220, and one end of the lead film 190 protruding outward from the pouch type case 110 may be disposed to directly contact the first layer 210 instead of the second layer 220.

In particular, as shown in FIG. 3 above, one end of the lead film 190 protrudes further in the direction in which the electrode lead protrudes and comes into contact with the electrode lead 180, and the second layer 220 of the gas guide portion 200 extends further than the first layer 210, so that a portion of the lead film 190 is disposed to contact the second layer 220. In this case, the adhesive strength between the lead film 190 and the gas guide portion 200, in addition to the adhesive strength between the lead film 190 and the electrode lead 180, creates a synergetic effect between the electrode lead 180 and the gas guide portion 200, resulting in a gas discharge part having enhanced durability.

Meanwhile, the lead film 190 may include at least one layer. Specifically, the lead film 190 may include a metal adhesive layer, a core layer, and a pouch adhesive layer, which are sequentially stacked.

The metal adhesive layer is in direct contact with the electrode lead 180 and may be used to make the lead film 190 adhere to the electrode lead 180. The metal adhesive layer may include any material that easily adheres to the electrode lead 180. Specifically, the metal adhesive layer may include acid modified polyolefin. For example, the metal adhesive layer may include at least one of acid modified polypropylene (PPa), acid modified polyethylene (PEa), or plasma-treated polypropylene (PP), but is not limited thereto. The metal adhesive layer may have a thickness of 50 µm to 80 µm, specifically 50 µm to 75 µm, more specifically 60 µm to 75 µm. When the thickness of the metal adhesive layer satisfies the above numerical range, there is an effect of preventing penetrated pinholes and leaks at an edge portion during fusion between the electrode lead and the lead film.

The core layer may be a layer placed at the center of the lead film 190. The core layer may include additives such as polypropylene, polyolefin elastomer (POE), and/or colorant, but is not limited thereto. For example, the polymer included in the core layer may be a homopolymer. When the homopolymer is included in the core layer, the melting point of the core layer may be controlled within the above numerical range and deformation caused by heat may be minimized, which serves better for securing insulation. As another example, the polymer included in the core layer may be fluorinated polyolefin, which may be polytetrafluoroethylene, or may be a mixture of polytetrafluoroethylene and polypropylene, and as a mixture, the components may be mixed at a weight ratio of 9:1 to 1:9. The case may achieve greater gas permeation performance than when gas permeates through the lead film 190 via the gas guide portion 200. The core layer may have a thickness of 40 µm to 70 µm, specifically 50 µm to 70 µm, more specifically 60 µm to 70 µm. When the thickness of the core layer satisfies the above numerical range, deformation caused by heat applied upon fusion and sealing may be prevented to bring about a robust design effect in terms of securing insulation.

The pouch adhesive layer may be a layer in direct contact with the battery case 110, specifically the sealant layer of the pouch film laminate. The pouch adhesive layer may include polypropylene or polyolefin elastomer (POE), but is not limited thereto. In particular, the polymer included in the pouch adhesive layer may be a copolymer. The melting point of the pouch adhesive layer including a copolymer may be controlled within the above numerical range, and the pouch adhesive layer has a melting point similar to that of the polymer in the sealant layer of the pouch film laminate, which serves better for securing sealing processability. The pouch adhesive layer may have a thickness of 40 µm to 100 µm, specifically 40 µm to 80 µm, more specifically 40 µm to 60 µm. When the thickness of the pouch adhesive layer satisfies the above numerical range, there is an effect of securing a polymer (e.g., polypropylene) residual rate sufficient to obtain strength for sealing between the electrode lead and the pouch film laminate.

### (5) Gas guide portion

The gas guide portion 200 serves to form a path for discharging gas from the inside of the pouch type case 110 to the outside. As shown in FIG. 2, the gas guide portion 200 of the present disclosure may be disposed between the electrode lead 180 and the lead film 190. In this case, in the region between the electrode lead 180 and the lead film 190 where the gas guide portion 200 is disposed, the electrode lead 180 and the lead film 190 may not be in direct contact, and in the region where the gas guide portion 200 is not disposed, the electrode lead 180 and the lead film 190 may be in direct contact.

Hereinafter, the gas guide portion 200 of the present disclosure will be described in more detail with reference to FIGS. 3 and 4. FIG. 3 is a cross-sectional view of a pouch type secondary battery before a pouch type case is opened, and FIG. 4 is a cross-sectional view of a pouch type secondary battery when a pouch type case is opened.

As shown in FIGS. 3 and 4, an interface between the gas guide portion 200 and the lead film 190 is normally unopened. When pressure inside the pouch type case 110 increases, the interface between the gas guide portion 200 and the lead film 190 is opened, thereby forming a gas discharge path 300. The gas inside the pouch type case 110 may move along the gas discharge path 300 and then pass through the lead film 190 to be discharged to the outside of the pouch. Accordingly, the pressure inside the pouch type case 110 may be reduced to prevent explosion or ignition of the pouch type case 110.

Meanwhile, as shown in FIGS. 3 and 4, the gas guide portion 200 of the present disclosure includes a first layer 210 in contact with the electrode lead 180, and a second layer 220 disposed on the first layer 210.

The first layer 210 is in contact with the electrode lead 180, and may be used to make the gas guide portion 200 adhere to the electrode lead 180.

The first layer 210 may include any material that easily adheres to the electrode lead 180. Specifically, the first layer 210 contains a modified polyolefin resin. The rise in the pressure of the pouch type case 110 allows an interface between the lead film 190 and the gas guide portion 200 to be opened, thereby forming the gas discharge path 300. Through this gas discharge path 300, the gas generated inside the pouch type case 110 may be discharged, resulting in reduced pressure of the case 110. However, the surface on which the gas guide portion 200 is bonded to the electrode lead 180 is the first layer 210, and when the adhesive strength between the first layer 210 and the electrode lead 180 is not sufficient, the gas guide portion 200 is detached from the electrode lead 180 or pushed outside of the pouch type case, causing leakage of an electrolyte solution inside.

Therefore, as in the present disclosure, when the first layer 210 that keeps the gas guide portion 200 on the electrode lead 180 includes a modified polyolefin resin, the adhesive strength between the gas guide portion 200 and the electrode lead 180 becomes greater. Accordingly, even when the pouch type secondary battery is stored at high temperature, the issue of the gas guide portion 200 being detached from the electrode lead 180 or the leakage of an electrolyte solution inside may be prevented.

According to an aspect of the present disclosure, as described above, the first layer 210 may have a structure in which the first layer 210 protrudes further than an end of the second layer 220 in the outer direction of the case 110 and is disposed in contact with the lead film 190. In this case, strong adhesive retention forces among the electrode lead 180, the gas guide portion 200, and the lead film 190 may contribute to improving durability.

The modified polyolefin resin included in the first layer 210 may include at least one of acid modified polyolefin or silane-modified polyolefin.

The acid modified polyolefin indicates a polyolefin resin graft-modified with acid. For example, the acid modified polyolefin may be obtained by introducing a carboxyl group (graft modification) by reacting unsaturated carboxylic acid with a polyolefin resin. In this case, the unsaturated carboxylic acid may include the concept of a carboxylic acid anhydride, and the carboxyl group may include the concept of a carboxylic acid anhydride group. The unsaturated carboxylic acid subjected to reactions with a polyolefin resin may include at least one selected from the group consisting of maleic acid, fumaric acid, itaconic acid, citraconic acid, glutaconic acid, tetrahydrophthalic acid, aconitic acid, maleic anhydride, itaconic anhydride, glutaconic anhydride, citraconic anhydride, aconitic anhydride, norbornedicarboxylic anhydride, and tetrahydrophthalic anhydride, but is not limited thereto. In particular, applying maleic anhydride is preferable to improve the adhesive strength between the gas guide portion 200 and the electrode lead 180. The acid modified polyolefin may include at least one selected from the group consisting of acid modified polypropylene (PPa) and acid modified polyethylene (PEa), but is not limited thereto.

The silane-modified polyolefin indicates a polyolefin resin graft-modified with an unsaturated silane compound. The silane-modified polyolefin may have a structure in which an unsaturated silane compound is graft-copolymerized to a polyolefin resin, which is a main chain. The silane-modified polyolefin resin may include at least one selected from the group consisting of a silane-modified polypropylene resin and a silane-modified ethylene-vinyl acetate copolymer, but is not limited thereto.

The first layer 210 may be modification-treated, and examples of the modification treatment include ion implantation treatment, plasma treatment, irradiation treatment, heat treatment, and the like, and treatment that changes the bonding structure of a polymer layer is preferred. These modification treatments may be performed individually, or may be performed in combination of two or more types. The modification-treated first layer 210 may include plasma-treated polypropylene (PP), but is not limited thereto.

The first layer 210 may have a thickness of 5 µm to 130 µm, specifically 30 µm to 120 µm, more specifically 30 µm to 80 µm. When the thickness of the first layer 210 satisfies the above numerical range, the first layer 210 melts within the specified production time (tact time) and accordingly, the gas guide portion 200 and the electrode lead 180 may be easily fused.

Meanwhile, according to an aspect of the present disclosure, the first layer 210 may include a ceramic filler. The ceramic filler may be included in an amount of 1 wt% to 19 wt%, specifically 5 wt% to 15 wt%, more specifically 5 wt% to 12 wt% with respect to a total weight of the first layer 210. When the amount of the ceramic filler satisfies the above range, without affecting the adhesive strength between the electrode lead 180 and the first layer 210, corrosion of the electrode lead 180 may be prevented by adsorbing gases such as HF generated through various side reactions. As a result, durability may be expected to be greatly improved.

In addition, the ceramic filler may have an average particle diameter D₅₀ of 1 µm to 20 µm, specifically 1 µm to 10 µm, more specifically 1 µm to 6 µm. When the average particle size D₅₀ satisfies the above range, the extrusion processability may stay at an enhanced level upon manufacturing the first layer 210. As a result, concerns over film adhesion, such as separation of the first layer 210 and the second layer 220 of the gas guide portion 200 or separation from the electrode lead 180 may be prevented.

Meanwhile, when the ceramic filler is in an amount of 1 wt% to 19 wt% with respect to a total weight of the lead film 190, and also the ceramic filler has an average particle diameter D₅₀ of 1 µm to 20 µm, the gas generated inside the pouch is easily adsorbed. This prevents a connection portion between the electrode lead and the pouch type film laminate from being corroded due to gas, thereby achieving high durability.

The ceramic filler may include at least one selected from the group consisting of CaCO₃, Ca(OH)₂, CaCl₂, CaO, KOH, NaOH, and Na₂CO. Preferably, the ceramic filler may include at least one of CaCO₃ and Ca(OH)₂, which are affordable and easily adsorb gases such as hydrofluoric acid (HF).

In addition, the first layer 210 may further include additives other than the ceramic filler described above. The inclusion of additives in the first layer 210 may change the physical properties of the first layer 210. For example, as an additive to control the tensile strength of the first layer 210, at least any one of carbon fiber, glass fiber, and aramid fiber may be further added.

The second layer 220 may be a layer in contact with the lead film 190.

The second layer 220 may include at least one of polytetrafluoroethylene (PTFE) or polyimide (PI), but is not limited thereto. In particular, when polyimide is included in the second layer 220, the adhesive strength between the second layer 220 and the lead film 190 is reduced. As a result, a gas discharge path 300 may be formed with less resistance when the pressure inside the case 110 increases.

The second layer 220 may have a thickness of 40 µm to 100 µm, specifically 40 µm to 90 µm, more specifically 45 µm to 75 µm. When the thickness of the second layer 220 satisfies the above range, the second layer 220 does not melt during the process of sealing, and when the pressure inside the case 110 increases, an interface between the second layer 220 and the lead film 190 may be opened to form the gas discharge path 300.

Meanwhile, a ratio (D1/D2) of a thickness (D1) of the first layer to a thickness (D2) of the second layer may be 0.4 to 2.0, specifically 0.4 to 1.5, more specifically 0.4 to 1.0. When the ratio (D1/D2) satisfies the above numerical range, upon the increase of the pressure inside the case 110, an interface between the second layer 220 and the lead film 190 is opened to form a gas discharge path, which may improve the adhesive strength between the gas guide portion 200 and the electrode lead 180.

### (6) Electrolyte

The pouch type secondary battery 100 according to the present disclosure may further include an electrolyte (not shown) injected into the pouch type case 110. The electrolyte is used to move lithium ions generated through electrochemical reactions of an electrode upon charging/discharging of the secondary battery 100. The electrolyte may include a nonaqueous organic electrolyte solution that is a mixture of lithium salt and an organic solvent, or a polymer using a polymer electrolyte. In addition, the electrolyte may include a sulfide-based solid electrolyte, an oxide-based solid electrolyte, or a polymer-based solid electrolyte, and such solid electrolyte may have flexibility, and thus be easily deformed under external force.

Hereinafter, the present invention will be described in more detail through specific examples. However, the Examples shown below are illustrated only for the understanding of the disclosure, and the scope of the inventive concept is not limited thereto. It will be apparent to those skilled in the art that various modifications and alterations are possible within the scope and technical range of the present disclosure, and such modifications and alterations fall within the scope of claims included herein.

### Examples and Comparative Examples

### Example 1

### (1) Manufacture of pouch type case

A polyethylene terephthalate (PET) film having a width of 266 mm, a length of 50 m, and a thickness of 12 µm and a nylon film having a width of 266 mm, a length of 50 m, and a thickness of 25 µm were stacked on one side of an aluminum alloy thin film having a width of 266 mm, a length of 50 m, and a thickness of 60 µm, and a polypropylene film having a width of 266 mm, a length of 50 m, and a thickness of 80 µm was stacked on the other side to prepare a pouch film laminate having a structure of polyethylene terephthalate/nylon/aluminum alloy thin film/polypropylene film.

In this case, the polyethylene terephthalate film and the nylon film are base layers, the aluminum alloy thin film is a gas barrier layer, and the polypropylene film is a sealant layer.

The pouch film laminate was molded to manufacture a pouch type case including an accommodation portion and a sealing portion.

### (2) Manufacture of pouch type secondary battery

A negative electrode, a positive electrode, and a porous polyethylene separator were assembled using a stacking method, and then laminated to manufacture an electrode assembly. Thereafter, an electrode lead was coupled to the electrode assembly.

LiPF₆ was dissolved in a solvent (EC:EMC:DMC = volume ratio of 3:3:4 ) to 1.0 M to prepare an electrolyte. The electrode assembly was accommodated in the pouch type case with a front end of the electrode lead protruding to the outside, and the electrolyte was injected.

A 40 µm thick acid modified polypropylene film (first layer) and a 50 µm thick polyimide film (second layer) were sequentially stacked on an upper surface of the electrode lead to form a gas guide portion.

Then, a 200 µm thick lead film was stacked on each of a lower surface of the electrode lead and an upper surface of the gas guide portion. The lead film may include a 75 µm thick metal adhesive layer containing copolymer polypropylene and acid modified polypropylene, a 65 µm thick core layer containing homopolymer polypropylene, and a 60 µm thick pouch adhesive layer containing copolymer polypropylene.

Thereafter, the sealing portion of the pouch type case was sealed for 2 seconds in the conditions of a seal bar area of 200 mm × 10 mm, 220 °C, and 0.27 MPa, and then left at 60 °C for 4 hours to manufacture a pouch type secondary battery. In this case, of the sealing portion, the portion where the lead film is formed has a structure in which lower case/lead film/electrode lead/gas guide portion/lead film/upper case are sequentially stacked.

### Example 2

A pouch type case and a secondary battery were manufactured in the same manner as in Example 1, except that an acid modified polypropylene film applied to the first layer had a thickness of 10 µm, and a polyimide film applied to the second layer had a thickness of 50 µm.

### Example 3

A pouch type case and a secondary battery were manufactured in the same manner as in Example 1, except that an acid modified polypropylene film applied to the first layer had a thickness of 120 µm, and a polyimide film applied to the second layer had a thickness of 50 µm.

### Example 4

A pouch type case and a secondary battery were manufactured in the same manner as in Example 1, except that an acid modified polyethylene film instead of an acid modified polypropylene film was applied to the first layer.

### Example 5

A pouch type case and a secondary battery were manufactured in the same manner as in Example 1, except that a polytetrafluoroethylene film instead of a polyimide film was applied to the second layer.

### Example 6

A pouch type case and a secondary battery were manufactured in the same manner as in Example 1, except that CaCO₃ (average particle diameter D₅₀: 2.8 µm) was mixed as a ceramic filler to make up 7 wt% of a total weight of acid modified polypropylene film when manufacturing the acid modified polypropylene film applied to the first layer.

### Example 7

A pouch type case and a secondary battery were manufactured in the same manner as in Example 1, except that CaCO₃ (average particle diameter D₅₀: 2.8 µm) was mixed as a ceramic filler to make up 11 wt% of a total weight of acid modified polypropylene film when manufacturing the acid modified polypropylene film applied to the first layer.

### Comparative Example 1

A pouch type case and a secondary battery were manufactured in the same manner as in Example 1, except that the gas guide portion 200 was not provided with the acid modified polypropylene film (first layer) (single layer).

### Comparative Example 2

A pouch type case and a secondary battery were manufactured in the same manner as in Example 1, except that an unmodified polyethylene film instead of an acid modified polypropylene film was applied to the first layer.

### Comparative Example 3

A pouch type case and a secondary battery were manufactured in the same manner as in Example 1, except that a polyimide film was applied to the first layer and an acid modified polypropylene film was applied to the second layer.

### Experimental Example 1: Evaluation of durability

For the pouch type secondary batteries manufactured in Examples 1 to 7 and Comparative Examples 1 to 3, the length of a gas guide portion separated from an electrode lead was measured, and adhesive strength of the electrode lead and the gas guide portion and adhesive strength under an electrolyte solution were measured, and decrease in the adhesive strength was calculated.
1) Storage stability under electrolyte solution (mm): in the process of manufacturing a pouch type secondary battery, HF was introduced into a pouch type case, and then the pouch type case was sealed and stored in a 60 °C chamber for 5 days. After the period of storage, length of at least a portion of the gas guide portion and lead film was separated from the electrode lead was measured. The results are shown in Table 1 below.

FIG. 7 is a perspective view showing an upper surface of a sealing portion according to an aspect of the present disclosure. As shown in FIG. 7, an electrode lead 180, a gas guide portion 200, and a lead film 190 are sequentially stacked on a sealing portion 150, and the gas guide portion 200 may include a first region 230 and a second region 240.

The gas guide portion 200 and the lead film 190 may be separated from the inside of the pouch to the outside when having low durability due to an electrolyte solution. In this case, the length of the gas guide portion 200 and/or the lead film 190 separated from the electrode lead 180 indicates a length (A) from an inner end of the pouch of a second region 240 to the separated portion.

2) Adhesive strength of electrode lead and lead film (N/cm): in the process of manufacturing a pouch type secondary battery, gas-generating materials were introduced into a pouch type case and then the pouch type case was sealed, thereby generating CO2 gas inside the pouch to increase pressure inside the pouch.

Thereafter, the resulting product was stored in a 60 °C chamber for 5 days, and then both ends of a lead assembly in which a portion was cut off at a distance of 10 mm from the inner end of the sealing portion, that is, the inner end of a gap portion of the second region 240 in FIG. 7 were connected to each of a lower jig and an upper jig of UTM, and then pulled 30 mm in a 180° direction at a speed of 50 mm/min to calculate an average value (N/10 mm) of a flat section of the measured adhesive strength graph. The results are shown in Table 1 below.

3) Adhesive strength under electrolyte (N/cm) and adhesive strength reduction rate (%): a lead assembly was extracted as in 2) above and then impregnated at 60 °C for 24 hours in an electrolyte, in which an organic solvent, in which ethylene carbonate (EC), ethylmethyl carbonate (EMC), and dimethylene carbonate (DMC) were mixed in a volume ratio of 3:3:4, and 1.0 M lithium salt of LiPF6 were mixed, and then adhesive strength under the electrolyte was measured in the same manner as in 2) above, and the rate at which the adhesive strength decreased before and after electrolyte impregnation was calculated.

**[Table 1]**

| | (1st layer thickness ) / (2nd layer thickness) | Length of separated gas guide portion (mm) | Adhesive strength between gas guide portion and electrode lead (N/cm) | Adhesive strength under electroly te (N/cm) | Adhesive strength reduction rate (%) |
|---|---|---|---|---|---|
| Example 1 | 0.8 | 1 | 30 | 28 | 6.7 |
| Example 2 | 0.2 | 6 | 18 | 16 | 11 |
| Example 3 | 2.4 | 4 | 21 | 18 | 14 |
| Example 4 | 0.8 | 3 | 26 | 24 | 7.7 |
| Example 5 | 0.8 | 2 | 28 | 27 | 3.6 |
| Example 6 | 0.8 | 1 | 47 | 45 | 4.3 |
| Example 7 | 0.8 | 1 | 41 | 40 | 2.4 |
| Comparative Example 1 | - | 13 | 10 | 8 | 20 |
| Comparative Example 2 | 0.8 | 11 | 12 | 8 | 33.3 |
| Comparative Example 3 | 1.3 | 13 | 8 | 0 (not measurabl e) | - |

According to Table 1, it is seen that the length of the separated (or pushed outward) gas guide portion and/or lead film in Examples 1 to 7 including a modified polyolefin resin in the first layer of the gas guide portion is significantly shorter than that of Comparative Examples 1 to 3, indicating enhanced durability. In addition, it is seen that the adhesive strength between the lead film and the electrode lead and the adhesive strength after electrolyte impregnation in Examples 1 to 7 are significantly greater than those of Comparative Examples 1 and 2, and Comparative Example 3 was completely separated after electrolyte impregnation to provide no measurable strength, indicating a significant reduction in durability under electrolyte.

### Description of Symbols

- 100:: Pouch type secondary battery
- 110:: Pouch type case
- 120:: First case
- 122:: Cup portion
- 124:: Accommodation portion
- 130:: Second case
- 132:: Cup portion
- 140:: Bridge portion
- 150:: Sealing portion
- 160:: Electrode assembly
- 170:: Electrode tab
- 172:: Positive electrode tab
- 174:: Negative electrode tab
- 180:: Electrode lead
- 182:: Positive electrode lead
- 184:: Negative electrode lead
- 190:: Lead film
- 200:: Gas guide portion
- 210:: First layer
- 220:: Second layer
- 300:: Gas discharge path

## Claims

1. A pouch type secondary battery comprising:
an electrode assembly;
a pouch type case comprising an accommodation portion for accommodating the electrode assembly and a sealing portion for sealing the accommodation portion;
an electrode lead connected to the electrode assembly and protruding out of the pouch type case via the sealing portion;
a lead film disposed between the electrode lead and the pouch type case; and
a gas guide portion disposed between the electrode lead and the lead film,
wherein the gas guide portion comprises a first layer in contact with the electrode lead, and a second layer disposed on the first layer, and
the first layer comprises a modified polyolefin resin.

2. The pouch type secondary battery of claim 1,wherein, in the pouch type secondary battery, a gas discharge path is formed by an opened interface between the lead film and the first layer when pressure inside the pouch type case increases.

3. The pouch type secondary battery of claim 1, wherein the first layer comprises acid modified polyolefin.

4. The pouch type secondary battery of claim 3, wherein the acid modified polyolefin comprises at least one selected from the group consisting of acid modified polypropylene (PPa) and acid modified polyethylene (PEa).

5. The pouch type secondary battery of claim 1, wherein a ratio (D1/D2) of a thickness (D1) of the first layer to a thickness (D2) of the second layer is 0.4 to 2.0.

6. The pouch type secondary battery of claim 1, wherein the second layer comprises at least one of polyimide (PI) and polytetrafluoroethylene (PTFE).

7. The pouch type secondary battery of claim 1, wherein the first layer has a thickness in a range from 5 µm to 130 µm.

8. The pouch type secondary battery of claim 1, wherein the second layer has a thickness in a range from 40 µm to 100 µm.

9. The pouch type secondary battery of claim 1, wherein the second layer is in direct contact with the lead film.

10. The pouch type secondary battery of claim 1, wherein the first layer further comprises a ceramic filler having an average particle diameter D₅₀ in a range from 1 µm to 20 µm.

11. The pouch type secondary battery of claim 10, wherein the ceramic filler comprises at least one selected from the group consisting of CaCO₃, Ca(OH)₂, CaCl₂, CaO, KOH, NaOH, and Na₂CO₃.

12. The pouch type secondary battery of claim 10, wherein the ceramic filler is contained in an amount in a range from 1 wt% to 19 wt% with respect to a total weight of the first layer.

13. The pouch type secondary battery of claim 1, wherein the electrode lead, the first layer, the second layer, and the lead film are sequentially stacked.

14. The pouch type secondary battery of claim 1, wherein one side of the electrode lead is coated with at least one selected from the group consisting of chromium (Cr), nickel (Ni), aluminum oxide (Al₂O₃), zirconium (Zr) -based anhydride salt, and titanium (Ti)-based anhydroxide salt.

15. The pouch type secondary battery of claim 1, wherein the lead film is disposed such that one end protruding outward of the pouch type case protrudes further than one end of the gas guide portion protruding outward of the pouch type case and is in direct contact with the electrode lead.
